## Europäisches Patentamt

## European Patent Office

## Office européen des brevets

(11) Veröffentlichungsnummer: **0 124 914**
**A1**

(12) **EUROPÄISCHE PATENTANMELDUNG**

(21) Anmeldenummer: **84200151.3**

(22) Anmeldetag: **03.02.84**

(51) Int. Cl.³: **B 07 C 5/34**
**G 01 N 25/04**

(30) Priorität: **12.02.83 DE 3304850**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **METALLGESELLSCHAFT AG**
Reuterweg 14 Postfach 3724
D-6000 Frankfurt/M.1(DE)

(71) Anmelder: **EUMET
METALLAUFBEREITUNGSGESELLSCHAFT MBH & CO.**
Ferdinand-Porsche-Strasse 10-14
D-6000 Frankfurt am Main(DE)

(71) Anmelder: **RTZ ORE SORTERS (NORTH AMERICA) INC.**
1790 Hembree Road Extension
Alpharetta, Ga.(US)

(72) Erfinder: **Pötzschke, Manfred, Dr. Dipl.-Chem.**
Ulmenweg 45
D-6242 Kronberg(DE)

(72) Erfinder: **Sattler, Hans-Peter, Dr. Ing.**
Ferdinandstrasse 22
D-6380 Bad Homburg(DE)

(74) Vertreter: **Fischer, Ernst, Dr.**
Reuterweg 14
D-6000 Frankfurt am Main 1(DE)

(54) **Metallteilchen-Sortierverfahren.**

(57) Es wird ein Verfahren zum Sortieren metallischer Teilchen nach ihrer chemischen Zusammensetzung vorgeschlagen, wobei die Schmelztemperatur und/oder der Schmelzbereich zur Identifizierung der Teilchen herangezogen wird. Dazu wird ein Strahlungspyrometer mit integriertem Laser verwendet, wobei zur Prüfung eines Teilchens nur Bruchteile einer Sekunde benötigt werden. In einem Diagramm sind die Schmelztemperaturen der in Shredder-Schrotten häufig vorkommenden Metalle und Legierungen zussammengestellt.

Fig.1

METALLGESELLSCHAFT
Aktiengesellschaft
Reuterweg 14

6000 Frankfurt/Main

10. Februar 1983
MLK/USCHW (1048P)
0124914

Prov. Nr. 8966 M

## Metallteilchen-Sortierverfahren

Die Erfindung bezieht sich auf ein Verfahren zur Aufteilung eines Stromes von Metallteilchen in Teilströme von
Metallteilchen einheitlicher chemischer Zusammensetzung
durch Vereinzeln und Bestrahlung der Teilchen mit elektromagnetischen Wellen, Auswertung der Rückstrahlung und
Steuerung einer Sortiereinrichtung, die je nach den Ergebnissen der Auswertung die Bewegungsbahn der einzelnen
Metallteilchen ändert.

Zum Sortieren von Teilchen unterschiedlicher chemischer
Zusammensetzung ist eine Anzahl von Verfahren bekanntgeworden, bei denen ein Strom vereinzelter Teilchen an einer
Strahlenquelle vorbeigeführt und bestrahlt und die Rückstrahlung gemessen und zur Identifizierung der Teilchenart
benutzt wird.

Zur Abtrennung von Diamanten aus dem Begleitmaterial wird
in der US-PS 42 12 397 vorgeschlagen, den Teilchenstrom
mittels Röntgenstrahlen zum Fluoreszieren anzuregen, die
Nachleuchtzeit photoelektrisch zu messen, und die Ergebnisse einer Sortier-Logik zuzuführen, die ihrerseits
mechanische oder pneumatische Abtrenneinrichtungen steuert.

0124914

Bei dem aus der DE-OS 30 47 536 bekanntgewordenen Verfahren sollen nicht nur Teilchen unterschiedlicher Metalle, sondern auch solche unterschiedliche Legierungen aus Schrotten mittels Röntgen- oder Isotopenstrahlung beaufschlagt, die Rückstrahlung gemessen und zur Identifizierung herangezogen werden.

Ein ähnliches Verfahren zum Sortieren von Metallschrotten ist auch aus New Scientist 63 (1982), S. 490 bekanntgeworden.

In Engineering and Mining-Journal 183 (1982,8) S. 72 bis 75 ist ein Verfahren zur Anreicherung von Erzen beschrieben, das ein Bestrahlen mit zwei radioaktiven Quellen mit unterschiedlichem Energieniveau vorsieht und die Gamma-Streu-Strahlung zur Unterscheidung der Teilchen benutzt.

Die genannten Verfahren leiden - soweit nicht ihre Anwendung schon von vornherein auf bestimmte Teilchenarten beschränkt ist - unter dem prinzipiellen Nachteil, daß sie auf einem Gebiet zunehmender Bedeutung, nämlich der Wiederverwertung der Nichteisen-Metallschrottfraktionen, nicht benutzt werden können, weil die hier vorkommenden Teilchen überwiegend eine Oberflächenbehandlung oder gar Beschichtung aufweisen, wodurch die Meßergebnisse verfälscht werden und die Ausbeute daher unbefriedigend ist.

Es stellt sich somit die Aufgabe, ausgehend von dem bekannten Verfahrensprinzip, eine Sortiermethode vorzuschlagen, bei der die Oberflächenbeschaffenheit der Metallteilchen keine Rolle mehr spielt. Es soll mit anderen Worten ein Verfahren gefunden werden, bei dem die Teilchen "im Kern" erkannt und mit qualitativ und quantitativ hoher Ausbeute sortiert werden können.

Zur Lösung dieser Aufgabe wird bei einem Verfahren der eingangs genannten Art vorgeschlagen, zur Unterscheidung der Metallteilchen voneinander, deren Schmelztemperatur und/oder deren Schmelzbereich heranzuziehen. Dazu werden die Metallteilchen mittels Laserstrahl punktuell aufgeschmolzen, der Temperaturverlauf mittels Strahlungspyrometer gemessen und elektronisch ausgewertet. Zur Feinsortierung von Legierungen mit gleichem Basismetall wird zweckmäßigerweise der Schmelzbereich herangezogen, als dessen Kenngröße entweder ein Temperaturintervall oder der Energieaufwand des Lasers benutzt wird. Das erfindungsgemäße Verfahren wird vorzugsweise auf geshredderte Schrotte angewandt, von denen die nichtmetallischen und ferromagnetischen Bestandteile bereits abgetrennt sind.

Zur Durchführung des Verfahrens wird zweckmäßigerweise ein Strahlungspyrometer mit integriertem Laser verwendet. Ein derartiges System ist in Temperature 5 (1982) S. 439-446 beschrieben. Ein gepulster Laserstrahl heizt auf der Oberfläche eines Teilchen einen Fleck von z.B. 1 mm Durchmesser unter gleichzeitiger Messung der Temperatur bis zum Schmelzen auf. Steigt die Temperatur trotz weiterer Energiezufuhr nicht weiter an, so ist der Schmelzpunkt bzw. der Beginn des Schmelzbereiches erreicht und kann zur Identifizierung des Teilchen herangezogen werden.

Derartige Systeme sind in der Lage, das Aufschmelzen und Temperaturmessen innerhalb von Bruchteilen von Sekunden durchzuführen, so daß demgegenüber die Bewegung des Meßobjektes keine Rolle spielt. Es kann davon ausgegangen werden, daß derartige Verfahren wirtschaftlich arbeiten, wenn pro Sekunde mindestens 10 Teilchen identifiziert werden können. Dazu müssen schnellaufende Vereinzelungs- und Sortiervorrichtungen verwendet werden. Zur weiteren Steigerung der Wirtschaftlichkeit des Verfahrens kann die Ge-

schwindigkeit des Teilchenstroms noch erhöht werden, wenn anstelle stationärer Prüfeinrichtungen solche verwendet werden, die zumindest für die jeweilige Meßdauer mit dem Teilchenstrom mitbewegt werden, so daß zwischen Prüfobjekt und Prüfgerät keine oder nur eine vernachläßigbar kleine relative Geschwindigkeit auftritt. Geht man von einem linear beweglichen Teilchenstrom aus, so kann das Prüfgerät entweder ebenfalls linear hin und her bewegt werden, so daß bei jeder Vorwärtsbewegung ein neues Teilchen erfaßt wird oder aber es können ein oder mehrere Prüfsysteme rotierend angeordnet und mit dem Strom der vereinzelten Prüfobjekte synchronisiert werden.

In dem beigefügten Diagramm sind die Schmelztemperaturen der wichtigsten, in Schrotten vorkommenden Nichteisenmetalle und Legierungen aufgetragen, wobei ohne weiteres zu erkennen ist, daß die Schmelztemperatur zur Identifizierung sehr gut geeignet ist. Das erfindungsgemäße Verfahren kann auch dahingehend verfeinert werden, daß sowohl der Schmelzbeginn als auch das Schmelzende erfaßt werden, wodurch eine weitere charakteristische Eigenschaft erfaßt wird und es möglich ist, innerhalb der einzelnen Metallgruppen nach ihren typischen Legierungen zu sortieren. Durch eine Kombination der Meßgrößen "Schmelztemperatur" und "Schmelzbereich" ist es beispielsweise möglich Aluminiumschrotte nach den im Diagramm angegebenen Legierungsgruppen zu sortieren.

0124914

<u>PATENTANSPRÜCHE</u>

1. Verfahren zur Aufteilung eines Stromes von Metallteilchen in Teilströme von Metallteilchen einheitlicher chemischer Zusammensetzung durch Vereinzeln und Bestrahlen der Teilchen mit elektromagnetischen Wellen, Auswertung der Rückstrahlung und Steuerung einer Sortiereinrichtung, die je nach den Ergebnissen der Auswertung die Bewegungsbahn der einzelnen Metallteilchen ändert, <u>dadurch gekennzeichnet</u>, daß zur Unterscheidung der Metallteilchen voneinander, deren Schmelztemperatur und/oder deren Schmelzbereich herangezogen wird.

2. Verfahren nach Anspruch 1, <u>dadurch gekennzeichnet</u>, daß die Metallteilchen mittels Laserstrahl punktuell aufgeschmolzen, der Temperaturverlauf mittels Strahlungspyrometer gemessen und elektronisch ausgewertet wird.

3. Verfahren nach Anspruch 2, <u>dadurch gekennzeichnet</u>, daß als Kenngröße für den Schmelzbereich ein Temperaturintervall benutzt wird.

4. Verfahren nach Anspruch 2, <u>dadurch gekennzeichnet</u>, daß als Kenngröße für den Schmelzbereich der Energieaufwand des Lasers herangezogen wird.

5. Anwendung des Verfahrens nach einem der Ansprüche 1 bis 4 auf geshredderte Schrotte, von denen die nichtmetallischen und ferromagnetischen Bestandteile bereits abgetrennt sind.

Fig.1

0124914

Nummer der Anmeldung

EP 84 20 0151

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 651 235 (GRISEBACH) * Anspruch 4 * | 1,2,5 | B 07 C 5/34 G 01 N 25/04 |
| A | US-A-4 000 642 (VOWINKEL) * Spalte 1, Zeilen 23-52 * | 1 | |
| A | GB-A-2 076 146 (GUNSON'S SORTEX LTD.) * Zusammenfassung; Seite 1, Zeilen 107-109 * | 1 | |
| A | CA-A-1 110 996 (RESOURCE RECOVERY LTD.) * Seite 2, Zeile 2 - Seite 3a, Zeile 9 * | 1,5 | |

---

|  |  |  | RECHERCHIERTE SACHGEBIETE (Int. Cl. ³) |
|---|---|---|---|
| | | | B 07 C G 01 N |

Der vorliegende Recherchenbericht wurde für alle Patentansprüche erstellt.

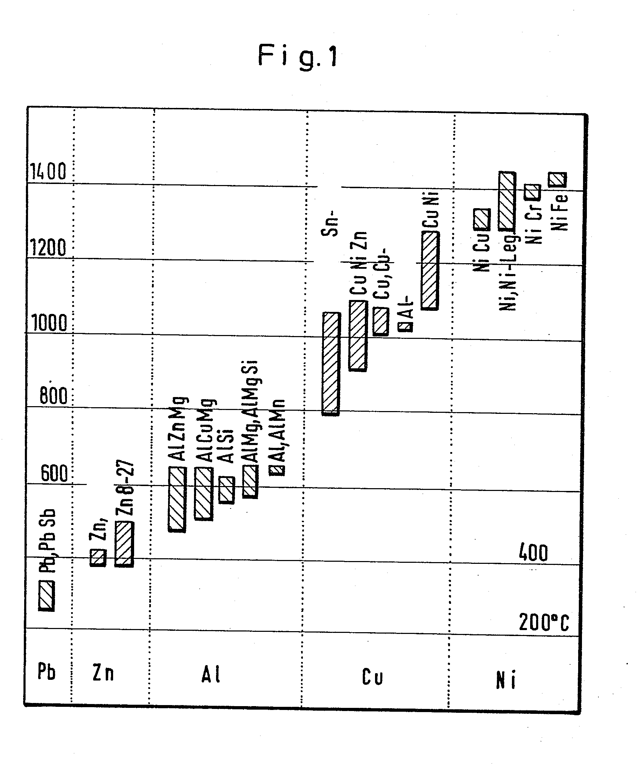

| Recherchenort | Abschlußdatum der Recherche | Prüfer |
|---|---|---|
| DEN HAAG | 11-05-1984 | PESCHEL W. |